# EUROPÄISCHE PATENTSCHRIFT

(11) **EP 3 877 251 B1**
(45) Veröffentlichungstag und Bekanntmachung des Hinweises auf die Patenterteilung: **07.09.2022**
(21) Anmeldenummer: 19787199.9
(22) Anmeldetag: 10.10.2019
(51) Int. Cl.: B63H 25/42, B63B 1/28, B63B 39/08

(54) **TRAGFLÜGELEINRICHTUNG FÜR EINE MOBILE OFFSHORE-VORRICHTUNG**
HYDROFOIL ARRANGEMENT FOR MOBILE OFFSHORE EQUIPMENT
DISPOSITIF D'AILE PORTANTE POUR UN DISPOSITIF OFFSHORE MOBILE

(30) Priorität: 06.11.2018 DE 102018127650
(43) Veröffentlichungstag der Anmeldung: 15.09.2021
(73) Patentinhaber: RWE Renewables GmbH, 45145 Essen (DE)
(72) Erfinder: ROSEN, Johannes, 45481 Mülheim (DE)
(74) Vertreter: Cohausz & Florack
(86) Internationale Anmeldenummer: PCT/EP2019/077499
(87) Internationale Veröffentlichungsnummer: WO 2020/094329

(56) Entgegenhaltungen:
- DE-U1-202014 003 766
- FR-A5- 2 063 498
- KR-B1- 101 411 508

## Beschreibung

Die Anmeldung betrifft eine mobile Offshore-Vorrichtung und ein Verfahren zum Betreiben einer mobilen Offshore-Vorrichtung.

Windkraftsysteme bzw. Windparks mit einer Mehrzahl von Windkraftanlagen sind bekannt. Eine Windkraftanlage ist hierbei zum Wandeln der kinetischen Energie des Winds in elektrische Energie eingerichtet. Aufgrund einer höheren Windsicherheit und/oder höherer Windgeschwindigkeiten werden vermehrt Offshore-Windenergiesysteme bzw. Offshore-Windparks installiert.

Bei Offshore-Windenergiesystemen mit einer Vielzahl von stationären Offshore-Vorrichtungen, wie Offshore-Windkraftanlagen, Offshore-Substationen, Offshore-Messstationen etc., gestalten sich insbesondere Wartungs- und/oder Reparaturvorgänge für eine entsprechende Offshore-Vorrichtung aufwendig und kostenintensiv. Wesentlicher Grund hierfür ist die Offshore-Lage einer solchen Vorrichtung.

Es ist bekannt, für Wartungs- und/oder Reparaturvorgänge mobile Offshore-Vorrichtungen, insbesondere Wasserfahrzeuge, wie Katamarankonstruktionen, einzusetzen, um Material und/oder Personal zu einer stationären Offshore-Vorrichtung zu befördern. Ein entsprechendes Wasserfahrzeug wird auch Offshore Crew Transfer Vessel genannt. Die bevorzugten Katamarankonstruktionen, die eine Rumpfeinrichtung mit zumindest zwei Rümpfen und einer darauf angeordneten Transport- und/oder Anlande-Plattform umfassen kann, können eine Länge zwischen 10 m und 30 m, vorzugsweise zwischen 20 und 30 m (z.B. ca. 24 m), aufweisen.

Für den Anlandungsvorgang an eine weitere Offshore-Vorrichtung wird ein entsprechendes Wasserfahrzeug mit Motorkraft an die Anlandeeinrichtung (auch Boatlanding genannt) der weiteren Offshore-Vorrichtung angedrückt. Die Höhe der Transport-Plattform bzw. Anlande-Plattform der mobilen Offshore-Vorrichtung gegenüber der Wasseroberfläche ist derart gewählt, dass diese zu der Höhe der Anlandeeinrichtung der weiteren (stationären) Offshore-Vorrichtung korrespondiert.

Der zuvor beschriebene Anlandungsvorgang weist jedoch Nachteile auf. Insbesondere ist das entsprechende Manöver nur bis zu einer bestimmten Wellenhöhe (z.B. ca. 1 bis 1,5 m (signifikant)) durchführbar. Übersteigt der Wellengang diese Wellenhöhe kann der Anlandungsvorgang aufgrund der durch diesen Wellenggang verursachten erhöhten Bewegung der mobilen Offshore-Vorrichtung nicht mehr in sicherer Weise durchgeführt werden. So kann der Wellengang zum Beispiel zu einer Krängung der mobilen Offshore-Vorrichtung um die Längsachse der mobilen Offshore-Vorrichtung und/oder zu einem Stampfen der mobilen Offshore-Vorrichtung um die Querachse der mobilen Offshore-Vorrichtung führen. Dies verhindert ein sicheres Anlanden an der weiteren Offshore-Vorrichtung.

Beispielsweise wird eine zuvor beschriebene Katamarankonstruktion bei dem Anlandungsvorgang mit seinem Bug gegen die stationäre Offshore-Vorrichtung gedrückt. Ab der bestimmten (signifikanten) Wellenhöhe (z.B. ca. 1 bis 1,5 m) besteht die Gefahr eines Abrutschens des Bugs der Katamarankonstruktion. Dies geht mit entsprechenden Verletzungsrisiken für das Personal einher. Demnach sind bei derartigen mobilen Offshore-Vorrichtungen Anlandungen und damit das Durchführen von Wartungs- und und/oder Reparaturvorgänge nicht bei einem Wellengang möglich, bei dem die bestimmte (signifikante) Wellenhöhe (z.B. ca. 1,5 m) erreicht oder überschritten wird. Dies führt zu einer ungewollten Verlängerung von Wartungs- und und/oder Reparaturvorgängen. Besonders problematisch ist dies, wenn der Betrieb der zu reparierenden und/der zu wartenden Offshore-Vorrichtung (z.B. Windkraftanlage) bis zum Abschluss des entsprechenden Wartungs- und und/oder Reparaturvorgangs unterbrochen werden muss.

Weiterhin bekannt zum Ausgleich der durch Wellen induzierten Bewegungen mobiler Offshore-Vorrichtungen sind passiv oder hydraulisch oder elektrisch angetriebene Mechaniken und entsprechende Steuerungen aktiv kompensierter Gangway-Systeme (Walk to work), wie z.B. Ampelmann, Uptime, etc. Nachteilig an diesen Vorrichtungen sind die aufwändige Konstruktion und das erhebliche Gewicht dieser Systeme, so dass sie nur auf größeren Schiffen einsetzbar sind.

Aus der Druckschrift KR 101 411 508 B1 ist eine mobile Offshore-Vorrichtung mit einer Rumpfeinrichtung und Tragflügeleinrichtungen bekannt. Die Druckschrift DE 20 2014 003 766 U1 offenbart ein Wasserfahrzeug mit einem Elektromotor. Schließlich ist aus der FR 2 063 498 A5 ein Wasserfahrzeug mit Tragflügeleinrichtungen bekannt.

Daher liegt der Anmeldung die Aufgabe zugrunde, eine mobile Offshore-Vorrichtung, insbesondere ein Wasserfahrzeug, für eine Anlandung an einer weiteren Offshore-Vorrichtung bereitzustellen, welches auch bei einem Wellengang mit höheren Wellenhöhen eine sichere Anlandung an der weiteren Offshore-Vorrichtung erlaubt.

Die Aufgabe wird gemäß einem ersten Aspekt der Anmeldung durch eine mobile Offshore-Vorrichtung, insbesondere ein Wasserfahrzeug, nach Anspruch 1 gelöst. Die mobile Offshore-Vorrichtung umfasst mindestens eine Rumpfeinrichtung und mindestens zwei mit der Rumpfeinrichtung verbundene Tragflügeleinrichtung. Die Tragflügeleinrichtung umfasst mindestens einen Grundkörper mit mindestens einer Verbindungseinheit. Die Verbindungseinheit ist zum Verbinden der Tragflügeleinrichtung mit der mobilen Offshore-Vorrichtung eingerichtet. Die Tragflügeleinrichtung umfasst mindestens einen an dem Grundkörper angeordneten Tragflügel. Die Tragflügeleinrichtung umfasst mindestens einen an dem Grundkörper angeordneten Strömungserzeuger. Der Strömungserzeuger ist zum Generieren einer Umströmung des Tragflügels eingerichtet. Die Tragflügeleinrichtung ist, in ihrem bestimmungsgemäßen Gebrauch, abhängig von mindestens einem bereitstellbaren Steuerdatensatz zumindest um eine im Wesentlichen vertikale Drehachse drehbar.

Anmeldungsgemäß ist erkannt worden, dass ein Anlandungsvorgang auch bei einem Wellengang mit einer Wellenhöhe über der bestimmten (signifikanten) Wellenhöhe von z.B. 1,5 m sicher durchführbar ist, wenn eine mobile Offshore-Vorrichtung über zwei oder mehr Tragflügeleinrichtungen gemäß Anspruch 1 verfügt. Indem die Tragflügeleinrichtung über einen Strömungserzeuger verfügt, kann durch die Tragflügeleinrichtung aktiv eine Umströmung des mindestens einen Tragflügel erzeugt und somit ein Anheben der an der Verbindungseinheit im bestimmungsgemäßen Gebrauch befestigten mobilen Offshore-Vorrichtung bewirkt werden. Insbesondere kann die Anhebung derart erfolgen, dass die Wellen unterhalb einer Rumpfeinrichtung der mobilen Offshore-Vorrichtung durchlaufen. Durch die anmeldungsgemäße Steuermöglichkeit der Tragflügeleinrichtung um eine im Wesentlichen vertikale Drehachse, ist eine exakte Anlandung an einer weiteren Offshore-Vorrichtung möglich. Demnach ermöglicht die Verwendung von anmeldungsgemäßen Tragflügeleinrichtungen eine sichere Anlandung der mobilen Offshore-Vorrichtung an einer weiteren Offshore-Vorrichtung auch bei einem Wellengang mit (signifikanten) Wellenhöhen größer als 1,5 m.

Unter einer mobilen Offshore-Vorrichtung ist vorliegend grundsätzlich jeder bewegliche und schwimmende Körper zu verstehen, wie eine mobile Offshore-Plattform. Insbesondere kann eine mobile Offshore-Vorrichtung ein Wasserfahrzeug mit einem Antrieb sein. Ein Wasserfahrzeug kann ein windbetriebenes und/oder maschinenbetriebenes Wasserfahrzeug mit einer Rumpfeinrichtung sein, die mindestens einen Rumpf umfasst.

Die Tragflügeleinrichtung umfasst einen Grundkörper, der über mindestens eine Verbindungseinheit verfügt. Die Verbindungseinheit ist insbesondere zum mechanischen Befestigen der Tragflügeleinrichtung an der mobilen Offshore-Vorrichtung eingerichtet. Beispielsweise kann die Verbindungseinheit eine Stütze sein, die an der Rumpfeinrichtung bzw. dem Körper der mobilen Offshore-Vorrichtung befestigt werden kann. Auch kann es sich bei der Verbindungseinheit um eine Befestigungsaufnahme handeln, in der zum Beispiel eine Stütze oder dergleichen der Rumpfeinrichtung eingesetzt und mit dessen Hilfe die Stütze an der Tragflügeleinrichtung befestigt werden kann. Mechanische Befestigungsarten können beispielsweise Schraubverbindungen, Schweißverbindungen etc. umfassen.

Darüber hinaus ist an dem Grundkörper mindestens ein Tragflügel angeordnet. Beispielsweise können der Grundkörper und der mindestens eine Tragflügel einstückig ausgebildet sein oder der mindestens eine Tragflügel kann an dem Grundkörper durch eine Verschraubung, Verklebung, Verschweißung etc. befestigt sein. Ein Tragflügel ist eingerichtet, bei einer Umströmung mit einem Fluid, insbesondere (Meer-)Wasser, einen dynamischen Auftrieb zu erzeugen. Die Funktion des mindestens einen Tragflügels besteht insbesondere darin, durch Beeinflussung der Umströmung durch die Tragflügelform eine ausreichend große Kraft senkrecht zur Anströmrichtung zu erzeugen. Diese Kraft ist der Auftrieb, der die mobile Offshore-Vorrichtung aus dem Wasser hebt. Ein Tragflügel kann auch als "hydrofoil" bezeichnet werden.

Anmeldungsgemäß wird die Umströmung im bestimmungsgemäßen Gebrauch der Tragflügeleinrichtung durch einen Strömungserzeuger generiert, der an dem Grundkörper der Tragflügeleinrichtung (selbst) angeordnet ist. Wie noch näher beschrieben werden wird, ist hierdurch und durch die drehbare Steuerbarkeit der Tragflügeleinrichtung ein Anheben der mobilen Offshore-Vorrichtung möglich. Insbesondere ist ein Anheben (bereits) bei einer Geschwindigkeit der Offshore-Vorrichtung von ca. 0 km/h möglich, so dass in sicherer Weise ein Anlandungsvorgang durchführbar ist.

Der mindestens eine Strömungserzeuger kann beispielsweise ein Propeller oder ein Impeller(Wasserstrahlantrieb) sein. Der Strömungserzeuger kann insbesondere an einem Ende der Längserstreckung des Grundkörpers befestigt sein. Der Strömungserzeuger kann so ausgebildet und angeordnet sein, dass im bestimmungsgemäßen Gebrauch eine Strömung bzw. Umströmung des mindestens einen Tragflügels generiert wird, die ausreichend ist, um einen Auftrieb zu bewirken, der die mobile Offshore-Vorrichtung aus dem Wasser hebt.

Die anmeldungsgemäße Tragflügeleinrichtung ist insbesondere eine steuerbare Tragflügeleinrichtung. So ist anmeldungsgemäß erkannt worden, dass es für einen Anlandungsvorgang erforderlich ist, dass die Tragflügeleinrichtung um eine im Wesentlichen vertikale Drehachse drehbar ist. Insbesondere kann ein Drehwinkel zwischen 0° und 360° einstellbar sein. Insbesondere kann in dem Steuerdatensatz als ein Steuerparameter mindestens ein (Soll-)Drehwinkel angegeben sein. Entsprechend diesem Steuerparameter kann die Drehung der Tragflügeleinrichtung eingestellt werden. Beispielsweise kann die Verbindungseinheit, insbesondere eine Stütze, drehbar sein. Auch kann die Stütze drehfest und nur der an der Stütze befestigte Grundkörper drehbar sein. Es versteht sich, dass geeignete Drehaktoren bzw. -antriebe vorgesehen sein können.

Gemäß einer ersten Ausführungsform der anmeldungsgemäßen Tragflügeleinrichtung kann der Grundkörper mindestens eine Antriebseinheit umfassen. In einer bevorzugten Ausführungsform können mindesten zwei Antriebseinheiten in Richtung der seitlichen Erstreckung des Tragflügels (Spannweite) nebeneinander vor oder hinter dem Tragflügel angeordnet sein. Die Antriebseinheit kann zum Antreiben des Strömungserzeugers eingerichtet sein. Vorzugsweise kann die Antriebseinheit in einem Gehäuse des Grundkörpers integriert sein. Eine kompakte Tragflügeleinrichtung kann bereitgestellt werden. Zudem ist die Kraftübertragung von der Antriebseinheit zu dem mindestens einen Strömungserzeuger einfach herstellbar. Besonders bevorzugt kann die Antriebseinheit ein (steuerbarer) Elektromotor sein. Bei einem Elektromotor gestaltet sich die Energieversorgung besonders einfach. Zudem ist ein Anlandungsvorgang oder dergleichen zeitlich beschränkt, so dass die Antriebseinheit nur temporär während des entsprechenden Vorgangs aktiviert werden muss. Hierzu ist ein Elektromotor besonders geeignet. Alternativ kann auch ein Motor, insbesondere Elektromotor, aber auch ein Verbrennungsmotor oder dergleichen, im Rumpf angeordnet werden, der über eine Wirkverbindung, insbesondere umfassend ein Umlenkgetriebe, mit dem mindestens einen Strömungserzeuger verbunden sein kann.

Wie bereits beschrieben, ist die Tragflügeleinrichtung eine steuerbare Tragflügeleinrichtung. Gemäß einer besonders bevorzugten Ausführungsform der anmeldungsgemäßen Tragflügeleinrichtung kann die Tragflügeleinrichtung in ihrem bestimmungsgemäßen Gebrauch zum Ändern des Anstellwinkels des Tragflügels abhängig von mindestens einem bereitstellbaren Steuerdatensatz eingerichtet sein. Beispielsweise kann die Tragflügeleinrichtung eine Aktoreinheit umfassen. Die Aktoreinheit kann in dem Grundkörper eingerichtet sein. Der Steuerdatensatz kann als Steuerparameter einen (Soll-)Anstellwinkel (z.B. zwischen -90° und +90° in Bezug zu einer horizontalen Bezugsebene) umfassen. Abhängig von diesem Steuerparameter kann die Aktoreinheit den Anstellwinkel des mindestens einen Tragflügels der Tragflügeleinrichtung ändern.

Alternativ oder zusätzlich kann die Tragflügeleinrichtung in ihrem bestimmungsgemäßen Gebrauch zum Ändern des Anstellwinkels mindestens einer an der Tragflügeleinrichtung montierten Endleistenklappe des Tragflügels abhängig von mindestens einem bereitstellbaren Steuerdatensatz eingerichtet sein. Beispielsweise kann an der Tragflügeleinrichtung mindestens eine verstellbare Endleistenklappe befestigt sein, mit der die Strömungsrichtung des Wassers änderbar ist (abhängig von der Winkelstellung). Die mindestens eine Endleistenklappe des Tragflügels kann abhängig von dem Steuerdatensatz verstellt werden, um den Anstellwinkel zu ändern.

Alternativ oder zusätzlich kann die Tragflügeleinrichtung in ihrem bestimmungsgemäßen Gebrauch zum Ändern der Antriebsleistung des Strömungserzeugers abhängig von mindestens einem bereitstellbaren Steuerdatensatz eingerichtet sein. Mit anderen Worten kann die Drehzahl eines Propellers oder Impellers steuerbar sein. Insbesondere kann die zuvor beschriebene elektrische Antriebseinheit steuerbar sein. Der Steuerdatensatz kann als Steuerparameter für eine anmeldungsgemäße Änderung der Antriebsleistung eine Sollleistung, Solldrehzahl etc. umfassen. Das Ändern der Antriebsleistung des Strömungserzeugers kann insbesondere durch die Antriebseinheit entsprechend dem mindestens einen bereitgestellten Steuerparameter durchgeführt werden.

Vorzugsweise kann ein Steuerdatensatz als Steuerparameter mindestens einen (Soll-) Drehwinkel, eine Sollleistung oder Solldrehzahl (oder dergleichen) und einen (Soll-)Anstellwinkel umfassen. Es versteht sich, dass mehrere Steuerdatensätze, die unterschiedliche Steuerparameter umfassen können, generiert werden können.

Zur Einstellung des Anstellwinkels gegenüber der Umströmung bzw. der Einstellwinkeldifferenz zwischen Strömungsgenerator und Tragflügel können sowohl Strömungsgenerator als auch Tragflügel um ihre Querachse drehbar ausgebildet sein. Auch kann der Tragflügel an seiner Endleiste teilweise oder durchgehend über die Spannweite drehbar gelagerte Klappen, auch Endleistenklappen genannt, besitzen. Die Verstellung des Anstellwinkels, der Einstellwinkeldifferenz und/oder der Endleistenklappen können einzeln oder in Kombination miteinander eine Auftriebsänderung des Tragflügels bewirken. Auch kann eine Drehzahländerung des mindestens einen Strömungsgenerators zur Änderung der Umströmungsgeschwindigkeit und damit zur Änderung der Auftriebskraft genutzt werden.

Die genannten Steuerparameter können derart generiert werden, dass die mobile Offshore-Vorrichtung eine bestimmte (gewünschte) Lageposition erreicht und insbesondere für eine bestimmte Zeitdauer beibehält. Insbesondere können (nahezu) kontinuierlich entsprechende Steuerdatensätze erzeugt werden, um die bestimmte (gewünschte) Lageposition zu erreichen und insbesondere während der bestimmten Zeitdauer beizubehalten. Die Lageposition ist insbesondere die Position der mobilen Offshore-Vorrichtung, die während eines Anlandungsvorgangs beibehalten werden soll. Die Lageposition der mobilen Offshore-Vorrichtung kann insbesondere durch zumindest ein nachfolgendes Kriterium definiert und insbesondere vorgegeben sein:
- ein Krängungswinkelkriterium der mobilen Offshore-Vorrichtung in Bezug zu der Längsachse der mobilen Offshore-Vorrichtung,
- ein Stampfwinkelkriterium der mobilen Offshore-Vorrichtung in Bezug zu der Querachse der mobilen Offshore-Vorrichtung,
- ein Gierwinkelkriterium der mobilen Offshore-Vorrichtung in Bezug zu der Hochachse der mobilen Offshore-Vorrichtung,
- ein Geschwindigkeitskriterium der mobilen Offshore-Vorrichtung,
- ein Kurskriterium der mobilen Offshore-Vorrichtung,
- ein vertikales Abstandskriterium der mobilen Offshore-Vorrichtung in Bezug zu der Wasseroberfläche und/oder zu einer Anlandeeinrichtung der weiteren Offshore-Vorrichtung,
- ein Andruckkraftkriterium (Betrag und/oder Winkel), und
- ein horizontales Abstandskriterium der mobilen Offshore-Vorrichtung zu einer Anlandeeinrichtung der weiteren Offshore-Vorrichtung.

Ein Krängungswinkelkriterium kann ein zulässiger Krängungswinkel, insbesondere ein zulässiger Krängungswinkelbereich (z.B. zwischen -5° und 5° in Bezug zu einer durch die Längsachse verlaufenden horizontalen Bezugsebene), sein. Für eine stabile Lage der mobilen Offshore-Vorrichtung ist insbesondere eine Reduzierung der maximalen Drehung um die Längsachse, auch Krängung genannt, erforderlich. Insbesondere abhängig von einem vorgebbaren zulässigen Krängungswinkelbereich kann mindestens ein Steuerparameter durch ein Rechenmodul einer Steuereinheit (nahezu kontinuierlich) bestimmt, insbesondere berechnet werden.

Bei mobilen Offshore-Vorrichtungen wird eine Bewegung um die Querachse als Stampfen bezeichnet. Ein Stampfwinkelkriterium kann ein zulässiger Stampfwinkel, insbesondere ein zulässiger Stampfwinkelbereich (z.B. zwischen -5° und 5° in Bezug zu einer durch die Querachse verlaufenden horizontalen Bezugsebene), sein. Für eine stabile Lage der mobilen Offshore-Vorrichtung ist insbesondere eine Reduzierung der maximalen Drehung um die Querachse erforderlich. Insbesondere abhängig von einem vorgebbaren zulässigen Stampfwinkelbereich kann mindestens ein Steuerparameter durch ein Rechenmodul einer Steuereinheit (nahezu kontinuierlich) bestimmt, insbesondere berechnet werden.

Bei mobilen Offshore-Vorrichtungen wird eine Bewegung um die Hochachse als Gieren bezeichnet. Ein Gierwinkelkriterium kann ein zulässiger Gierwinkel, insbesondere ein zulässiger Gierwinkelbereich (z.B. zwischen -5° und 5°), sein. Für eine stabile Lage der mobilen Offshore-Vorrichtung ist insbesondere eine Reduzierung der maximalen Drehung um die Hochachse, auch Gierachse genannt, erforderlich. Insbesondere abhängig von einem vorgebbaren zulässigen Gierwinkelbereich kann mindestens ein Steuerparameter durch ein Rechenmodul einer Steuereinheit (nahezu kontinuierlich) bestimmt, insbesondere berechnet werden.

Ferner kann alternativ oder zusätzlich zu dem mindestens einen Winkelkriterium ein Geschwindigkeitskriterium, beispielsweise ein zulässiger Geschwindigkeitswert (z.B. ca. 0 km/h) oder Geschwindigkeitsbereich (z.B. bis maximal 2 km/h), der mobilen Offshore-Vorrichtung für die gewünschte Lageposition definiert sein.

Auch kann neben dem Gierwinkelkriterium ein weiteres Kurskriterium der mobilen Offshore-Vorrichtung vorgegeben sein. Auch kann die Höhe der mobilen Offshore-Vorrichtung (insbesondere ein geeigneter Bezugspunkt, wie die Unterseite der Rumpfeinrichtung, Oberseite der Anlandungs-Plattform etc.) zur Wasserlinie definiert sein, indem beispielsweise ein zulässiges vertikales Abstandskriterium der mobilen Offshore-Vorrichtung in Bezug zu der Wasseroberfläche (z.B. 2 m, zwischen 1,8 m und 2,2 m) und/oder zu einer Anlandeeinrichtung der weiteren Offshore-Vorrichtung (z.B. 0 m, zwischen -0,3 m und 0,3 m) vorgegeben ist. Schließlich kann ein zulässiges horizontales Abstandskriterium der mobilen Offshore-Vorrichtung zu einer Anlandeeinrichtung der weiteren Offshore-Vorrichtung (z.B. 0 m, zwischen -0,1 m und 0,1 m) definiert sein.

Neben Winkel- und Abstandskriterien können auch Beschleunigungskriterien (in alle Achsenrichtungen sowie Drehrichtungen um die jeweiligen Achsen) definiert sein und Geschwindigkeitskriterien können horizontal und vertikal definiert sein.

Insbesondere ist vorliegend unter einem Lageparameter jeder Lageparameter im Raum (Position, Neigung, jeweils dreiachsig)und auch deren jeweilige zeitliche Ableitungen (axiale bzw. Winkelgeschwindigkeiten sowie axiale bzw. Winkelbeschleunigungen) umfasst.

Wie noch beschrieben wird, kann die Bestimmung des mindestens einen Steuerparameters bzw. die Generierung des Steuerparametersatz abhängig von mindestens einem (augenblicklichen) Lageparameter der mobilen Offshore-Vorrichtung durchgeführt werden.

Um eine mobile Offshore-Vorrichtung in Gebieten mit einer geringen Wassertiefe betreiben zu können, kann gemäß einer weiteren Ausführungsform der anmeldungsgemäßen Tragflügeleinrichtung die Tragflügeleinrichtung in ihrem bestimmungsgemäßen Gebrauch in einer vertikalen Richtung verfahrbar sein. Beispielsweise kann die Stütze in einer vertikalen Richtung verfahrbar sein. Eine entsprechende Aktoreinheit kann vorgesehen sein. Alternativ oder zusätzlich kann die Tragflügeleinrichtung, insbesondere die Verbindungseinheit, klappbar ausgebildet sein. Beispielsweise kann die mobile Offshore-Vorrichtung über eine Mehrzahl von Tragflügeleinrichtungen verfügen, von denen mindestens eine seitlich an der mindestens einen Rumpfeinrichtung befestigt sein kann. Für den bestimmungsgemäßen Gebrauch kann eine Tragflügeleinrichtung dann aufgeklappt, beispielsweise aufgefaltet werden. Nach dem bestimmungsgemäßen Gebrauch kann die Tragflügeleinrichtung wieder eingeklappt bzw. zusammengefaltet werden. Insbesondere kann eine als Verbindungseinheit ausgebildete Stütze über mindestens einen Falt- bzw. Klappmechanismus verfügen.

Ein weiterer Aspekt der Anmeldung ist eine mobile Offshore-Vorrichtung, insbesondere ein Wasserfahrzeug, zum Anlanden an eine weitere (stationäre) Offshore-Vorrichtung. Die mobile Offshore-Vorrichtung umfasst mindestens eine Rumpfeinrichtung. Die mobile Offshore-Vorrichtung umfasst mindestens zwei mit der Rumpfeinrichtung verbundene Tragflügeleinrichtungen, die zuvor beschrieben wurden. Die mobile Offshore-Vorrichtung umfasst mindestens eine Steuereinheit. Die Steuereinheit ist zum Bereitstellen des mindestens einen Steuerdatensatzes eingerichtet.

Die mobile Offshore-Vorrichtung ist vorzugsweise eine zuvor beschriebene mobile Offshore-Vorrichtung, die insbesondere zum Anlanden an eine weitere Offshore-Vorrichtung, wie eine weitere mobile Offshore-Vorrichtung oder eine stationäre Offshore-Vorrichtung, z.B. eine stationäre Offshore-Vorrichtung eines Offshore-Windparks, eingerichtet ist.

Die mobile Offshore-Vorrichtung umfasst mindestens zwei zuvor beschriebene Tragflügeleinrichtungen, vorzugsweise zumindest drei zuvor beschriebene Tragflügeleinrichtungen. Zumindest wenn nur zwei Tragflügeleinrichtungen vorgesehen sind, kann die mobile Offshore-Vorrichtung zusätzlich über mindestens eine Aufhängungseinheit bzw. einen Aufhängungspunkt verfügen. Mit mindestens drei Tragflügeleinrichtungen oder mindestens zwei Tragflügeleinrichtungen und mindestens einem Aufhängungspunkt kann während eines Anlandungsvorgangs eine stabile (zuvor beschriebene) Lageposition erreicht und insbesondere auch bei (signifikanten)Wellenhöhen größer als 1,5 m beibehalten werden.

Die mobile Offshore-Vorrichtung umfasst eine Steuereinheit, insbesondere in Form einer Recheneinheit, die zum Bereitstellen eines zuvor beschriebenen Steuerdatensatzes eingerichtet ist. Insbesondere kann das Bereitstellen das Berechnen und Generieren von mindestens einem zuvor beschriebenen Steuerparameter umfassen, der für das Erreichen und Beibehalten der zuvor beschriebenen Lageposition einzustellen ist.

In einer ersten Ausführungsform der mobilen Offshore-Vorrichtung kann die mobile Offshore-Vorrichtung mindestens eine Lageerfassungseinheit umfassen. Die Lageerfassungseinheit kann zum Erfassen mindestens eines (augenblicklichen) Lageparameters der mobilen Offshore-Vorrichtung eingerichtet sein. Die Lageerfassungseinheit kann mit der Steuereinheit koppelbar sein. Insbesondere kann die Lageerfassungseinheit den mindestens einen erfassten Lageparameter der Steuereinheit vorzugsweise nahezu kontinuierlich zur Verfügung stellen. Die Steuereinheit kann zum Generieren des mindestens einen Steuerdatensatzes abhängig von dem mindestens einen erfassten Lageparameter eingerichtet sein. Indem insbesondere die augenblickliche Lageposition der mobilen Offshore-Vorrichtung in Form mindestens eines Lageparameters berücksichtigt wird, kann ein Steuerdatensatz generiert, insbesondere berechnet, werden, der ein Erreichen oder Beibehalten einer gewünschten (zuvor beschriebenen) Lageposition ermöglicht.

Gemäß einer weiteren Ausführungsform kann die mobile Offshore-Vorrichtung mindestens eine Bewegungserfassungseinheit umfassen, die zum Erfassen mindestens eines Bewegungsparameters der mobilen Offshore-Vorrichtung eingerichtet sein kann. Die Steuereinheit kann zum Generieren des mindestens einen Steuerdatensatzes abhängig von dem mindestens einen erfassten Bewegungsparameter eingerichtet sein.

Bevorzugt kann der mindestens eine Lageparameter der mobilen Offshore-Vorrichtung ausgewählt sein aus der Gruppe, umfassend:
- einen (augenblicklichen) Krängungswinkel der mobilen Offshore-Vorrichtung in Bezug zu der Längsachse der mobilen Offshore-Vorrichtung,
- einen (augenblicklichen) Stampfwinkel der mobilen Offshore-Vorrichtung in Bezug zu der Querachse der mobilen Offshore-Vorrichtung,
- einen (augenblicklichen) Gierwinkel der mobilen Offshore-Vorrichtung in Bezug zu der Hochachse der mobilen Offshore-Vorrichtung,
- eine (augenblickliche) Geschwindigkeit der mobilen Offshore-Vorrichtung,
- einen (augenblicklichen) vertikalen Abstand der mobilen Offshore-Vorrichtung (in vertikaler Richtung) zu der Wasseroberfläche und/oder zu einer Anlandeeinrichtung der weiteren Offshore-Vorrichtung,
- einen (augenblicklichen) horizontalen Abstand der mobilen Offshore-Vorrichtung, insbesondere der Anlande-Plattform der mobilen Offshore-Vorrichtung, (in horizontaler Richtung) zu einer Anlandeeinrichtung der weiteren Offshore-Vorrichtung.

Vorzugsweise kann die Lageerfassungseinheit über mindestens einen Sensor zum (nahezu kontinuierlichen) Messen mindestens eines der zuvor genannten Lageparameter verfügen. Vorzugsweise kann eine Mehrzahl von geeigneten Sensoren vorgesehen sein. Die Steuereinheit kann insbesondere eingerichtet sein, Steuerparameter derartig zu generieren, dass die gemessenen tatsächlichen Parameter ein entsprechendes vorgegebenes Kriterium (z.B. zumindest während des Anlandungsvorgangs) erfüllen. Insbesondere kann die Sollantriebsleistung, der Solldrehwinkel und/oder der Sollanstellwinkel derart berechnet werden, dass beispielsweise ein tatsächlicher Krängungswinkel im vorgegebenen zulässigen Krängungswinkelbereich bleibt. In entsprechender Weise können die Steuerparameter eingestellt werden, um alternativ oder vorzugsweise zusätzlich mindestens ein weiteres zuvor beschriebenes Kriterium einzuhalten.

Alternativ oder bevorzugt zusätzlich zu dem mindestens einen Lageparameter können auch Bewegungsparameter erfasst und insbesondere berücksichtigt werden, wie Drehrate(n) und/oder Beschleunigung(en).

Die Steuereinheit kann insbesondere eingerichtet sein, den mindestens einen generierten Steuerparameter über ein drahtgebundenes und/oder drahtloses Kommunikationsnetz der mobilen Offshore-Vorrichtung an die entsprechenden Einheiten bzw. Aktoren zu übertragen.

Um mit einer noch höheren Zuverlässigkeit und/oder bei besonders ungünstigen Umgebungsverhältnissen (besonders hoher Wellengang, besonders starke Strömung etc.) eine gewünschte Lageposition zu erreichen und insbesondere beizubehalten, kann gemäß einer bevorzugten Ausführungsform der mobilen Offshore-Vorrichtung die Steuereinheit zum Generieren des mindestens einen Steuerdatensatzes (mit mindestens einem Steuerparameter) abhängig von mindestens einem bereitgestellten Umgebungsparameter der mobilen Offshore-Vorrichtung eingerichtet sein. Der mindestens eine Umgebungsparameter kann ausgewählt sein aus der Gruppe, umfassend:
- Wellenhöhe (z.B. max. Wellenhöhe, durchschnittliche Wellenhöhe),
- (augenblickliche und/oder durchschnittliche) Windgeschwindigkeit,
- (augenblickliche und/oder durchschnittliche) Windrichtung,
- (augenblickliche und/oder durchschnittliche) Strömungsrichtung,
- (augenblickliche und/oder durchschnittliche) Strömungsgeschwindigkeit.

Beispielsweise kann die mobile Offshore-Vorrichtung mindestens einen Sensor zum (nahezu kontinuierlichen) Messen mindestens eines der zuvor genannten Umgebungsparameter umfassen. Alternativ oder zusätzlich kann der mindestens eine Umgebungsparameter von einer weiteren Offshore-Vorrichtung bereitgestellt werden. Beispielsweise kann ein Offshore-Windpark über entsprechende Messvorrichtungen (Messbojen, Windmessmast etc.) verfügen. Wenn ein Anlandungsvorgang bei einer Offshore-Vorrichtung des Offshore-Windparks durchgeführt wird, kann, beispielsweise über ein drahtloses Kommunikationsnetz, der mindestens eine durch eine Messvorrichtung des entsprechenden Offshore-Windparks erfasste Umgebungsparameter an die Steuereinheit der mobilen Offshore-Vorrichtung übertragen werden.

Es ist erkannt worden, dass durch einen Strömungserzeuger und/oder dem mindestens einen Tragflügel einer ersten Tragflügeleinrichtung einer mobilen Offshore-Vorrichtung Wirbel erzeugt werden können, die die Umströmung einer weiteren, insbesondere benachbart zu der ersten Tragflügeleinrichtung angeordneten Tragflügeleinrichtung beeinträchtigen können. Um die Beeinträchtigung durch ungewünschte Wirbel zumindest zu reduzieren, wird anmeldungsgemäß vorgeschlagen, dass mindestens ein Leitblech mit der Rumpfeinrichtung verbunden ist, derart, dass das Leitblech zwischen den zumindest zwei Tragflügeleinrichtungen angeordnet ist. Das Leitblech ist zumindest in einer vertikalen Richtung verfahrbar. Indem mindestens ein entsprechendes Leitblech vorgesehen ist, kann verhindert werden, dass Wirbel eine benachbarte Tragflügeleinrichtung erreichen. Zumindest kann der Wirbeleffekt durch ein entsprechendes Leitblech abgeschwächt werden.

Wie bereits beschrieben wurde, kann eine Tragflügeleinrichtung vorzugsweise über einen Elektromotor als Antriebseinheit verfügen. Gemäß einer weiteren Ausführungsform kann die mobile Offshore-Vorrichtung mindestens eine elektrische Energieversorgungseinheit umfassen. Die elektrische Energieversorgungseinheit kann zum Versorgen mindestens einer Antriebseinheit mindestens einer Tragflügeleinrichtung eingerichtet sein. Die elektrische Energieversorgungseinheit kann mindestens ein erstes zu einem zweiten elektrischen Anschlussmodul einer Offshore-Vorrichtung eines Offshore-Windparks korrespondierendes elektrisches Anschlussmodul umfassen. Alternativ oder zusätzlich kann die elektrische Energieversorgungseinheit mindestens eine wiederaufladbare Batterie umfassen. Alternativ oder zusätzlich kann die elektrische Energieversorgungseinheit auch eine Stromerzeugungseinheit (z.B. Verbrennungsmotor oder Gasturbine mit Generator oder eine Brennstoffzelle) umfassen. Vorzugsweise kann die zum Betreiben der elektrischen Antriebseinheiten der Tragflügeleinrichtungen zumindest teilweise von der weiteren Offshore-Vorrichtung, an die angelandet werden soll, bereitgestellt werden. Insbesondere für den Fall, dass die weitere Offshore-Vorrichtung eine Offshore-Vorrichtung eines Offshore-Windparks ist, kann vorteilhafterweise auf die durch den Offshore-Windpark erzeugte Energie bzw. Leistung zurückgegriffen werden. Hierdurch kann auf eine Anordnung einer Batterie auf der mobilen Offshore-Vorrichtung verzichtet oder es kann zumindest eine (wiederaufladbare) Batterie mit geringer Kapazität verwendet werden. Dies reduziert das Eigengewicht einer mobilen Offshore-Vorrichtung, so dass in entsprechender Weise das zu ladbare und transportierbare Gewicht erhöht sein kann.

Gemäß einer besonders bevorzugten Ausführungsform der mobilen Offshore-Vorrichtung kann die mobile Offshore-Vorrichtung mindestens vier mit der Rumpfeinrichtung verbundene Tragflügeleinrichtungen umfassen. Der Rumpfbereich kann vier Eckbereiche aufweisen. Jeweils eine Tragflügeleinrichtung der mindestens vier Tragflügeleinrichtungen kann in jeweils einem Eckbereich angeordnet sein. Durch eine entsprechende Anordnung kann in einfacher und gleichzeitig zuverlässiger Weise eine bestimmte Lageposition erreicht und insbesondere beibehalten werden.

Bei einer bevorzugten Ausführungsform einer mobilen Offshore-Vorrichtung als Katamarankonstruktion mit zwei Rümpfen, können die Eckbereiche durch die vier Endbereiche der Rümpfe gebildet werden. Die vier Tragflügeleinrichtungen können dann beispielsweise ein Rechteck aufspannen. Durch eine entsprechende Anordnung von vier Tragflügeleinrichtungen an einer Katamarankonstruktion kann in besonders zuverlässiger Weise eine bestimmte Lageposition erreicht und insbesondere beibehalten werden.

Gemäß einer weiteren Ausführungsform können die Tragflügeleinrichtungen, Antriebseinheiten und die Strömungserzeuger bei entsprechender Ausrichtung bzw. Steuerung als Antrieb verwendet werden, wie bei konventionellen Tragflächenbooten / Hydrofoils. Insbesondere können die Tragflügeleinrichtungen und die Strömungserzeuger während des Transits innerhalb des bzw. in den /aus dem Windpark genutzt werden. Insbesondere kann in dieser Konfiguration eine ausreichende Vorwärtsgeschwindigkeit schon durch nur einen Teil von eingeschalteten Strömungserzeuger erreicht werden (als zum Herausheben und Manövrieren an einer Stelle nötig ist). Eine einzelne Ansteuerung der Tragflügel, Antriebseinheiten und/oder Strömungserzeuger kann auch in dieser Konfiguration vorteilhaft sein, um welleninduziert auftretende Beschleunigungen und Winkeländerungen zu begrenzen sowie den Strömungswiderstand durch Herausheben des Rumpfes aus dem Wasser zu minimieren.

Ein noch weiterer Aspekt der Anmeldung ist ein Verfahren zum Betreiben einer zuvor beschriebenen mobilen Offshore-Vorrichtung, insbesondere zum Anlanden an eine weitere Offshore-Vorrichtung. Das Verfahren umfasst:
- Bereitstellen mindestens eines Lageparameters der mobilen Offshore-Vorrichtung,
- Generieren mindestens eines Steuerdatensatzes, basierend auf dem mindestens einen bereitgestellten Lageparameter,
- Steuern der mindestens zwei Tragflügeleinrichtungen, wobei das Steuern zumindest das Drehen der mindestens einen Tragflügeleinrichtung abhängig von dem mindestens einen generierten Steuerdatensatz zumindest um eine im Wesentlichen vertikale Drehachse der Tragflügeleinrichtung umfasst.

Das Generieren des Steuerdatensatz kann insbesondere wie zuvor beschrieben wurde erfolgen.

Gemäß einer ersten Ausführungsform des anmeldungsgemäßen Verfahrens kann das Steuern ein Ändern des Anstellwinkels des Tragflügels mindestens einer Tragflügeleinrichtung abhängig von mindestens einem generierten Steuerdatensatz umfassen. Alternativ oder vorzugsweise zusätzlich kann das Steuern ein Ändern des Anstellwinkels mindestens einer an der Tragflügeleinrichtung montierten Endleistenklappe des Tragflügels abhängig von mindestens einem bereitstellbaren Steuerdatensatz umfassen. Alternativ oder vorzugsweise zusätzlich kann das Steuern ein Ändern der Antriebsleistung des Strömungserzeugers mindestens einer Tragflügeleinrichtung abhängig von mindestens einem generierten Steuerdatensatz umfassen. Insbesondere können das Generieren des Steuerdatensatz und das Steuern der entsprechenden Einheiten/Aktoren wie zuvor beschrieben wurde erfolgen.

Gemäß einer bevorzugten Ausführungsform des anmeldungsgemäßen Verfahrens kann das Steuern der mindestens zwei Tragflügeleinrichtungen derart durchgeführt werden, dass die mobile Offshore-Vorrichtung eine vorgebbare Lageposition erreicht (und insbesondere während einer bestimmten Zeitdauer (z.B. während des Anlandungsvorgangs) beibehält). Die vorgebbare Lageposition kann (wie oben beschrieben wurde) durch mindestens ein Kriterium definiert sein, ausgewählt aus der Gruppe, umfassend:
- ein vorgebbares Krängungswinkelkriterium der mobilen Offshore-Vorrichtung in Bezug zu der Längsachse der mobilen Offshore-Vorrichtung,
- ein vorgebbares Stampfwinkelkriterium der mobilen Offshore-Vorrichtung in Bezug zu der Querachse der mobilen Offshore-Vorrichtung,
- ein vorgebbares Gierwinkelkriterium der mobilen Offshore-Vorrichtung in Bezug zu der Hochachse der mobilen Offshore-Vorrichtung,
- ein vorgebbares Geschwindigkeitskriterium der mobilen Offshore-Vorrichtung,
- ein vorgebbares vertikales Abstandskriterium der mobilen Offshore-Vorrichtung in Bezug zu der Wasseroberfläche und/oder zu einer Anlandeeinrichtung der weiteren Offshore-Vorrichtung, und
- ein vorgebbares horizontales Abstandskriterium der mobilen Offshore-Vorrichtung zu einer Anlandeeinrichtung der weiteren Offshore-Vorrichtung.

Ferner kann ein weiterer Aspekt der Anmeldung die Verwendung von zumindest zwei zuvor beschriebenen Tragflügeleinrichtungen zum Betreiben einer zuvor beschrieben mobilen Offshore-Vorrichtung sein.

Es versteht sich, dass eine anmeldungsgemäße Einheit zumindest teilweise aus Software und/oder zumindest teilweise aus Hardware (z.B. Prozessor, Speichermedium, Schnittstellen etc.) gebildet sein kann.

Die Merkmale der Tragflügeleinrichtungen, mobilen Offshore-Vorrichtungen, Verfahren und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Tragflügeleinrichtung, die anmeldungsgemäße mobile Offshore-Vorrichtung, das anmeldungsgemäße Verfahren und die anmeldungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Tragflügeleinrichtung gemäß der vorliegenden Anmeldung,
- Fig. 2: eine schematische Unteransicht eines Ausführungsbeispiels einer mobilen Offshore-Vorrichtung gemäß der vorliegenden Anmeldung,
- Fig. 3: eine schematische Seitenansicht eines Ausführungsbeispiels einer mobilen Offshore-Vorrichtung gemäß der vorliegenden Anmeldung, und
- Fig. 4: ein Diagramm eines Ausführungsbeispiels eines Verfahrens gemäß der vorliegenden Anmeldung.

In den Figuren werden für gleiche Elemente gleiche Bezugszeichen verwendet.

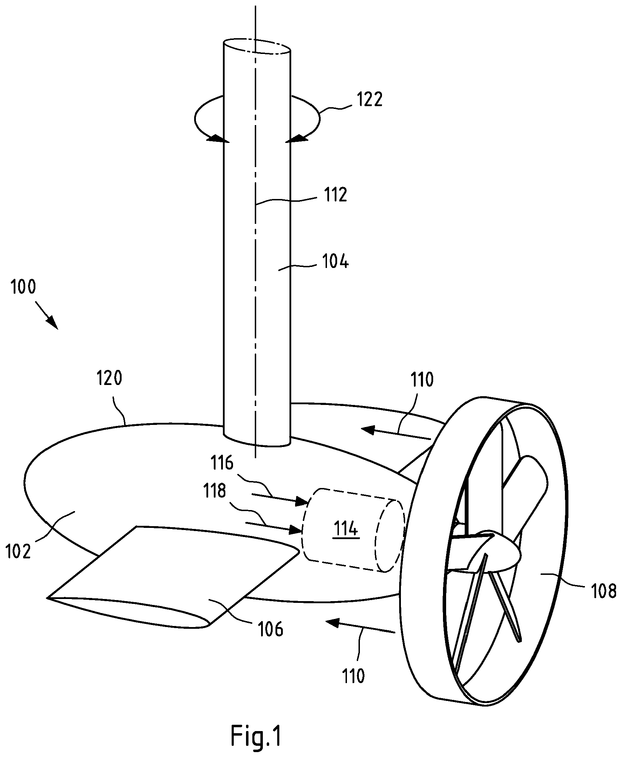

Die Figur 1 zeigt eine schematische Perspektivansicht eines Ausführungsbeispiels einer Tragflügeleinrichtung 100 gemäß der vorliegenden Anmeldung. Wie aus der Figur 1 zu erkennen ist, umfasst die dargestellte Tragflügeleinrichtung 100 einen Grundkörper 102, zwei Tragflügel 106, eine Verbindungseinheit 104 und einen Strömungserzeuger 108.

Die Tragflügel 106 sind an den äußeren Seitenflächen des Grundkörpers 102 befestigt. Beispielsweise können die Tragflügel 106 durch ein geeignetes Verbindungsverfahren (z.B. Schweißen, Kleben etc.) angebracht sein. Auch ist es vorstellbar, dass ein Grundkörper und der mindestens eine Tragflügel einstückig gebildet sind.

Vorliegend ist an einem Längsende des Grundkörpers 102 ein Strömungserzeuger 108, insbesondere in Form eines Propellers oder Impellers, angeordnet. Der Strömungserzeuger 108 kann von einer Antriebseinheit 114 angetrieben werden. Im vorliegenden, bevorzugten Ausführungsbeispiel ist die Antriebseinheit 114 in dem Grundkörper 102 angeordnet. Insbesondere kann die Antriebseinheit 114 in dem Gehäuse 120 des Grundkörpers 102 integriert sein. Alternativ kann die Antriebseinheit auch an einer anderen Position einer (nicht dargestellten) mobilen Offshore-Vorrichtung angeordnet sein.

Besonders bevorzugt kann die Antriebseinheit 114 ein Elektromotor 114 sein. Über eine elektrische Verbindung 116 bzw. ein elektrisches Netz 116, insbesondere mindestens eine elektrische Leitung 116, kann der Elektromotor 114 mit elektrischer Energie versorgt werden. Beispielsweise kann die elektrische Leitung 116 durch den Grundkörper 102 und durch die Verbindungseinheit 104 zu einer (nicht dargestellten) elektrischen Energieversorgungseinheit der mobilen Offshore-Vorrichtung verlaufen.

Bei anderen Varianten der Anmeldung können in dem Grundkörper weitere Komponenten, wie eine wiederaufladbare Batterie, ein Getriebe, eine lokale Steuerung etc., angeordnet sein. Bei noch weiteren Varianten der Anmeldung kann ein Motor (z.B. Elektromotor, Verbrennungsmotor, Gasturbine und/oder Brennstoffzelle) an Bord einer mobilen Offshore-Vorrichtung angeordnet sein, an dem die Tragflügeleinrichtung 100 befestigbar sein kann. Insbesondere kann ein derartiger Motor über eine Wirkverbindung, insbesondere umfassend ein Umlenkgetriebe, mit dem mindestens einen Strömungserzeuger 108 verbunden sein.

Der Strömungserzeuger 108 ist eingerichtet, eine Umströmung 110 der Tragflügel 106 zu generieren. Indem eine Umströmung aktiv generiert wird, kann ein ausreichender Auftrieb erzeugt werden, um die mobile Offshore-Vorrichtung gegenüber der Wasseroberfläche anzuheben.

Vorzugsweise kann der Strömungserzeuger 108 ein steuerbarer Strömungserzeuger 108 sein, um insbesondere unterschiedliche Strömungsgeschwindigkeiten zu generieren. Bei einem Propeller oder Impeller kann beispielsweise abhängig von der Leistung die Drehzahl geändert werden.

Insbesondere kann ein (drahtgebundenes oder drahtloses) Kommunikationsnetz 118 vorgesehen sein. Über das Kommunikationsnetz 118 kann mindestens ein Steuerdatensatz, der zumindest einen Steuerparameter (z.B. Sollleistung, Solldrehzahl etc.) umfasst, an die Antriebseinheit 114 übertragen werden.

Zudem ist die Tragflügeleinrichtung 100 in ihrem bestimmungsgemäßen Gebrauch abhängig von mindestens einem bereitstellbaren Steuerdatensatz zumindest um eine im Wesentlichen vertikale Drehachse 112 drehbar (durch den Pfeil 122 angedeutet). Insbesondere kann als Steuerparameter ein Drehwinkel (im Bereich von 0° bis 360°) vorgegeben werden. Im vorliegenden Beispiel ist die Drehachse 112 identisch mit der Längsachse der als Stütze 104 ausgeführten Verbindungseinheit 104. Es versteht sich, dass dies bei anderen Varianten der Anmeldung nicht der Fall sein kann.

Im vorliegenden Ausführungsbeispiel kann insbesondere die Stütze 104 drehbar an der mobilen Offshore-Vorrichtung gelagert sein. Eine Drehung der Tragflügeleinrichtung 100 erfolgt vorliegend daher durch ein Drehen der Stütze 104.

Bei einer nicht gezeigten Variante der Anmeldung kann die Tragflügeleinrichtung mindestens eine ansteuerbare und verstellbare Endleistenklappe aufweisen. Insbesondere kann der Anstellwinkel bei einer derartigen Endleistenklappe verstellbar sein.

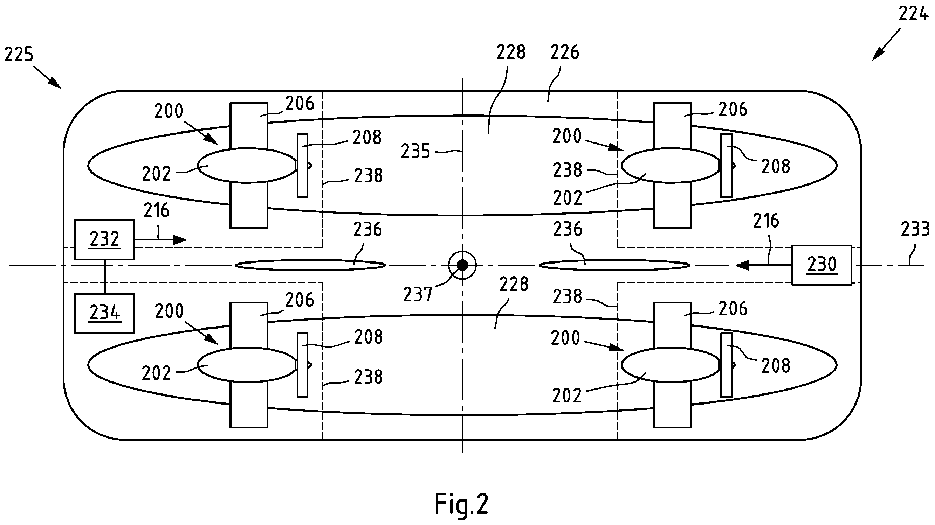

Die Figur 2 zeigt eine schematische Ansicht einer Ausführungsform einer mobilen Offshore-Vorrichtung 224. Insbesondere ist eine Unteransicht der mobilen Offshore-Vorrichtung 224 dargestellt. Die mobile Offshore-Vorrichtung 224 umfasst eine Mehrzahl von Tragflügeleinrichtungen 200. Insbesondere kann eine dargestellte Tragflügeleinrichtung 200 entsprechend der Tragflügeleinrichtung 100 gemäß dem Ausführungsbeispiel nach Figur 1 gebildet sein, auf die an dieser Stelle zur Vermeidung von Wiederholgen verwiesen wird.

Die mobile Offshore-Vorrichtung 224 ist vorliegend eine Katamarankonstruktion 224 mit einer (schematisch dargestellten) Rumpfeinrichtung 225. Die Rumpfeinrichtung 225 umfasst zwei Rümpfe 228 und eine mit den Rümpfen 228 befestigte Transport-und/oder Anlande-Plattform 226.

Wie zu erkennen ist, umfasst die Rumpfeinrichtung 225 vier Eckbereiche 238. In jedem dieser Eckbereiche 238 ist jeweils eine Tragflügeleinrichtung 200 angeordnet. Insbesondere umfasst ein Eckbereich 238 die vier Enden der zwei Rümpfe 228. Vorliegend ist an jedem dieser vier Enden jeweils eine Tragflügeleinrichtung 200 angeordnet. Insbesondere kann eine Tragflügeleinrichtung 200 über die zuvor beschriebene Verbindungseinheit an der Rumpfeinrichtung 225 bzw. dem entsprechenden Rumpf 228 befestigt sein.

Da im bestimmungsgemäßen Gebrauch von einer Tragflügeleinrichtung 200 ungewünschte (Wasser-)Wirbel erzeugt werden können, die den Auftrieb einer benachbarten Tragflügeleinrichtung 200 beeinträchtigen können, weist die vorliegende mobile Offshore-Vorrichtung 224 mindestens ein Leitblech 236 auf. Das Leitblech 236 kann zumindest in einer vertikalen Richtung verfahrbar sein. Vorzugsweise kann das Leitblech 236 in weiteren Richtungen verfahrbar sein. Hierdurch kann die Beeinträchtigung von Wirbeln zumindest reduziert werden.

Darüber hinaus weist die mobile Offshore-Vorrichtung eine Längsachse 233, eine Querachse 235 und eine Hochachse 237 auf. Ein Drehen der mobilen Offshore-Vorrichtung 224 um die Längsachse 233 wird insbesondere als Krängung bezeichnet. Das Ausmaß der Krängung wird durch den Krängungswinkel der mobilen Offshore-Vorrichtung 224 in Bezug zu der Längsachse 233 der mobilen Offshore-Vorrichtung 233 repräsentiert. Ein Drehen der mobilen Offshore-Vorrichtung 224 um die Querachse 235 wird insbesondere als Stampfen bezeichnet. Das Ausmaß des Stampfens wird durch den Stampfwinkel der mobilen Offshore-Vorrichtung 224 in Bezug zu der Querachse 235 der mobilen Offshore-Vorrichtung 224 repräsentiert. Ein Drehen der mobilen Offshore-Vorrichtung 224 um die Hochachse 237 wird insbesondere als Gieren bezeichnet. Das Ausmaß des Gierens wird durch den Gierwinkel der mobilen Offshore-Vorrichtung 224 in Bezug zu der Gierachse 237 der mobilen Offshore-Vorrichtung 224 repräsentiert.

Eine stabile Lageposition der mobilen Offshore-Vorrichtung 224 liegt insbesondere dann vor, wenn der Krängungswinkel während einer bestimmten Zeitdauer ein vorgegebenes Krängungswinkelkriterium (wie ein bestimmter Krängungswinkelbereich), der Stampfwinkel während einer bestimmten Zeitdauer ein vorgegebenes Stampfwinkelkriterium (wie ein bestimmter Stampfwinkelbereich) und der Gierwinkel während einer bestimmten Zeitdauer ein vorgegebenes Gierwinkelkriterium (wie ein bestimmter Gierwinkelbereich) einhält. Die bestimmte Zeitdauer kann beispielsweise die Zeitdauer für einen Anlandungsvorgang repräsentieren. Es versteht sich, dass weitere Kriterien vorgegeben sein können.

Um diese sicherzustellen, kann die mobile Offshore-Vorrichtung 224 über mindestens eine Lage- und/oder Bewegungserfassungseinheit 234 verfügen, die beispielsweise über eine Mehrzahl von Sensoren verfügen kann. Die Sensoren können beispielsweise (nahezu kontinuierlich) als Lageparameter den augenblicklichen Krängungswinkel, den augenblicklichen Stampfwinkel und/oder den augenblicklichen Gierwinkel messen und die erfassten Werte einer Steuereinheit 232 zur Verfügung stellen. Es versteht sich, dass gemäß anderen Varianten der Anmeldung weitere (zuvor beschriebene) Lageparameter erfasst und bereitgestellt werden können. Alternativ oder zusätzlich können die Sensoren als Bewegungsparameter Drehraten und Beschleunigungen erfassen.

Basierend auf den zur Verfügung gestellten Lageparameter und insbesondere vorgegebenen Kriterien für eine bestimmte Lageposition kann die Steuereinheit 232 mindestens einen Steuerdatensatz mit Steuerparametern generieren, derart, dass die gewünschte bzw. bestimmte Lageposition erreicht und insbesondere während der bestimmten Zeitdauer beibehalten wird. Insbesondere können die Steuerparameter (nahezu) kontinuierlich entsprechend den (nahezu) kontinuierlich erfassten Lageparametern von der Steuereinheit 232 angepasst werden.

Bevorzugt können die (nicht dargestellten) Antriebseinheiten der Tragflügeleinrichtungen 200 elektrische Antriebseinheiten sein, die durch eine elektrische Energieversorgungseinheit 230 über ein elektrisches Netz 216 mit elektrischer Leistung bzw. elektrischem Strom versorgt werden können. Bei anderen Varianten kann eine Tragflügeleinrichtungen über mindestens eine Endleistenklappe verfügen.

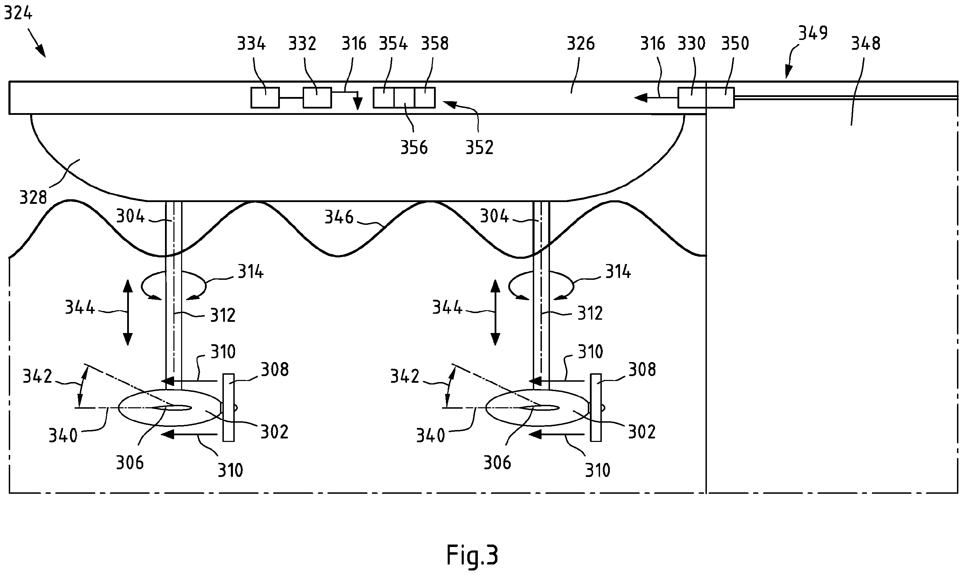

Die Figur 3 zeigt eine schematische Ansicht eines Ausführungsbeispiels einer mobilen Offshore-Vorrichtung 324. Insbesondere ist eine schematische Seitenansicht eines Ausführungsbeispiels einer mobilen Offshore-Vorrichtung 324 dargestellt. Beispielsweise kann es sich bei der mobilen Offshore-Vorrichtung 324 um das zuvor beschriebene Ausführungsbeispiel gemäß Figur 2 handeln, auf das an dieser Stelle zur Vermeidung von Wiederholgen verwiesen wird.

Die Figur 3 zeigt eine mobile Offshore-Vorrichtung 324, insbesondere eine Katamarankonstruktion 324, während eines Anlandungsvorgangs an einer weiteren, vorliegend stationären, Offshore-Vorrichtung 348. Beispielsweise ist die Offshore-Vorrichtung 348 (z.B. Windkraftanlage) eine Offshore-Windkraftanlage 348 eines Offshore-Windparks.

Die Katamarankonstruktion 324 kann eine elektrische Energieversorgungseinheit 330 insbesondere in Form eines ersten elektrischen Anschlussmoduls 330 umfassen. Das erste elektrische Anschlussmodul 330 der Katamarankonstruktion 324 kann mechanisch und/oder elektrisch zu einem zweiten elektrischen Anschlussmodul 350 der Offshore-Vorrichtung 348 korrespondieren. Optional kann die Katamarankonstruktion 324 und/oder eine, vorzugsweise jede, Tragflügeleinrichtung 300 zusätzlich mindestens eine (nicht dargestellte) wiederaufladbare Batterie umfassen. Die Anschlussmodule 330, 350 können beispielsweise Steckmodule (z.B. Stecker und Steckdose) oder induktiv arbeitende Module sein.

Vorliegend kann vorteilhafterweise auf die durch den Offshore-Windpark erzeugte Energie bzw. Leistung zurückgegriffen werden. Hierdurch kann auf eine Anordnung einer Batterie auf der mobilen Offshore-Vorrichtung 324 verzichtet oder es kann zumindest eine (wiederaufladbare) Batterie mit geringer Kapazität verwendet werden.

Die elektrische Energie bzw. Leistung kann über ein elektrisches Netz 316, insbesondere elektrische Leitungen 316, zu den elektrischen Antriebseinheiten der Tragflügeleinrichtungen 300 übertragen werden.

Die mobile Offshore-Vorrichtung 324 umfasst ferner mindestens eine Lage- und/oder Bewegungserfassungseinheit 334 und mindestens eine Steuereinheit 332. Wie bereits beschrieben wurde, kann die Lageerfassungseinheit 334 vorzugsweise eine Mehrzahl von Lageparametern, wie Krängungswinkel, Stampfwinkel, Gierwinkel, vertikaler Abstand zur Wasseroberfläche und/oder zu Anlandeeinrichtung 349, horizontaler Abstand zwischen mobiler Offshore-Vorrichtung 324 und Anlandeeinrichtung 349, Geschwindigkeit der mobilen Offshore-Vorrichtung 324 etc., erfassen Wie oben (ebenfalls bereits) beschrieben wurde, kann die Steuereinheit 332 basierend auf den erfassten Lageparametern und insbesondere entsprechenden, vorgegebenen Kriterien mindestens einen Steuerdatensatz 352 mit Steuerparametern 354, 356 und 358 erzeugen, die das Erreichen der bestimmten Lageposition und insbesondere das Beibehalten der bestimmten Lageposition während einer bestimmten Zeitdauer erlauben. Insbesondere können die Steuerparameter 354, 356 und 358 nahezu kontinuierlich entsprechend den erfassten Lageparametern von der Steuereinheit 332 angepasst werden.

Vorzugsweise können als Steuerparameter 354, 356 und 358 zumindest eine Solldrehwinkel 354, ein Sollanstellwinkel 356 und/oder eine Sollantriebsleistung 358 (z.B. Solldrehzahl, Sollleistungswert etc.) generiert werden. Über das Kommunikationsnetz 316 können die Steuerparameter 354, 356 und 358 an die entsprechenden (nicht dargestellten) Aktoren übertragen werden. Die Aktoren stellen entsprechend den Steuerparametern den Drehwinkel um die vertikale Drehachse 312 der entsprechenden Tragflügeleinrichtung 300 ein, den Anstellwinkel 342 (z.B. zwischen -45° und +45° bezogen auf eine horizontale Ebene 340) der entsprechenden Tragflügeleinrichtung 300 ein und/oder die Antriebsleistung der entsprechenden Antriebseinheit der entsprechenden Tragflügeleinrichtung 300 ein.

Es versteht sich, dass anstelle eines einzelnen Steuerdatensatzes eine Mehrzahl von Steuerdatensätzen generiert werden können, die jeweils z.B. nur einen Steuerparameter umfassen. Zudem versteht es sich, dass jede Tragflügeleinrichtung 300, insbesondere jeder einzelne Aktor einer Tragflügeleinrichtung, individuell ansteuerbar sein kann.

Es versteht sich ferner, dass eine mobile Offshore-Vorrichtung weitere Komponenten, wie Aufbauten etc., umfassen kann, die jedoch vorliegend zugunsten einer besseren Übersicht nicht dargestellt wurden. Entsprechendes gilt für die weitere Offshore-Vorrichtung.

Schließlich kann eine Tragflügeleinrichtung 300 auch in vertikaler Richtung 344 verfahrbar sein. Dies ermöglicht es, die mobile Offshore-Vorrichtung 324 auch in Gewässern mit geringer Tiefe zu betreiben bzw. höher über den Wasserspiegel hinaus anzuheben. Bei anderen Varianten der Anmeldung kann die Tragflügeleinrichtung 300 alternativ oder zusätzlich in einer horizontalen Richtung verfahrbar sein.

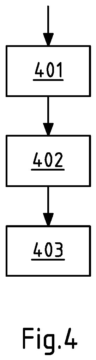

Die Figur 4 zeigt ein Diagramm eines Ausführungsbeispiels eines Verfahrens zum Betreiben einer mobilen Offshore-Vorrichtung, insbesondere einer zuvor beschriebenen mobilen Offshore-Vorrichtung 224, 324. Insbesondere wird das Durchführen eines Anlandungsvorgangs der mobilen Offshore-Vorrichtung 224, 324 an eine weitere Offshore-Vorrichtung 348 in der Figur 4 dargestellt.

In einem ersten Schritt 401 kann mindestens ein Lageparameter der mobilen Offshore-Vorrichtung einer Steuereinheit bereitgestellt werden, wie zuvor beschrieben wurde. In einem nächsten Schritt 402 kann, wie zuvor beschrieben wurde, mindestens ein Steuerdatensatz, basierend auf dem mindestens einen bereitgestellten Lageparameter, generiert werden.

Dann kann in Schritt 403 mindestens eine Tragflügeleinrichtung gesteuert werden, wobei das Steuern zumindest das Drehen der mindestens einen Tragflügeleinrichtung abhängig von dem mindestens einen generierten Steuerdatensatz zumindest um eine im Wesentlichen vertikale Drehachse der Tragflügeleinrichtung umfasst. Wie bereits beschrieben wurde, können weitere Steuerparameter erzeugt und die entsprechenden Aktoren entsprechend gesteuert werden.

Es versteht sich, dass zumindest zwei der zuvor beschriebenen Schritte zumindest teilweise parallel durchgeführt werden können.

## Patentansprüche

1. Mobile Offshore-Vorrichtung (224, 324), insbesondere Wasserfahrzeug (224, 324), zum Anlanden an eine weitere Offshore-Vorrichtung (348) umfassend:
- mindestens eine Rumpfeinrichtung (228, 328),
- mindestens zwei mit der Rumpfeinrichtung (228, 328) verbundene Tragflügeleinrichtungen (100, 200, 300), umfassend:
- mindestens einen Grundkörper (102, 202, 302) mit mindestens einer Verbindungseinheit (104, 304), die zum Verbinden der Tragflügeleinrichtung (100, 200, 300) mit der mobilen Offshore-Vorrichtung (224, 324) eingerichtet ist,
- mindestens einen an dem Grundkörper (102, 202, 302) angeordneten Tragflügel (106, 206, 306),
- mindestens einen an dem Grundkörper (102, 202, 302) angeordneten Strömungserzeuger (108, 208, 308), der zum Generieren einer Umströmung (110, 310) des Tragflügels (106, 206, 306) eingerichtet ist,
- wobei die Tragflügeleinrichtung (100, 200, 300) in ihrem bestimmungsgemäßen Gebrauch abhängig von mindestens einem bereitstellbaren Steuerdatensatz (352) zumindest um eine im Wesentlichen vertikale Drehachse (114, 314) drehbar ist, und
- mindestens eine Steuereinheit (232, 332), die zum Bereitstellen des mindestens einen Steuerdatensatzes (352) eingerichtet ist, **dadurch gekennzeichnet dass**
- mindestens ein Leitblech (236) mit der Rumpfeinrichtung (228, 328) verbunden ist, derart, dass das Leitblech (236) zwischen den zumindest zwei Tragflügeleinrichtungen (100, 200, 300) angeordnet ist,
- wobei das Leitblech (236) zumindest in einer vertikalen Richtung verfahrbar ist.

2. Mobile Offshore-Vorrichtung (224, 324) nach Anspruch 1, **dadurch gekennzeichnet, dass**
- der Grundkörper (102, 202, 302) mindestens eine Antriebseinheit (114) umfasst, die zum Antreiben des Strömungserzeugers (108, 208, 308) eingerichtet ist,
- wobei die Antriebseinheit (114) insbesondere ein Elektromotor (114) ist.

3. Mobile Offshore-Vorrichtung (224, 324) nach Anspruch 1 oder 2, **dadurch gekennzeichnet, dass**
- die Tragflügeleinrichtung (100, 200, 300) in ihrem bestimmungsgemäßen Gebrauch zum Ändern des Anstellwinkels (342) des Tragflügels (106, 206, 306) abhängig von mindestens einem bereitstellbaren Steuerdatensatz (352) eingerichtet ist,
und/oder
- die Tragflügeleinrichtung (100, 200, 300) in ihrem bestimmungsgemäßen Gebrauch zum Ändern des Anstellwinkels (342) mindestens eine an der Tragflügeleinrichtung montiere Endleistenklappe des Tragflügels (106, 206, 306) abhängig von mindestens einem bereitstellbaren Steuerdatensatz (352) eingerichtet ist,
und/oder
- die Tragflügeleinrichtung (100, 200, 300) in ihrem bestimmungsgemäßen Gebrauch zum Ändern der Antriebsleistung des Strömungserzeugers (108, 208, 308) abhängig von mindestens einem bereitstellbaren Steuerdatensatz (352) eingerichtet ist.

4. Mobile Offshore-Vorrichtung (224, 324) nach einem der vorherigen Ansprüche, **dadurch gekennzeichnet, dass**
- die Tragflügeleinrichtung (100, 200, 300) in ihrem bestimmungsgemäßen Gebrauch in einer vertikalen Richtung (344) und/oder in einer horizontalen Richtung verfahrbar ist,
und/oder
- die Tragflügeleinrichtung (100, 200, 300) klappbar ausgebildet ist.

5. Mobile Offshore-Vorrichtung (224, 324) nach einem der vorherigen Ansprüche, **dadurch gekennzeichnet, dass**
- die mobile Offshore-Vorrichtung (224, 324) mindestens eine Lageerfassungseinheit (234, 334) umfasst, die zum Erfassen mindestens eines Lageparameters der mobilen Offshore-Vorrichtung (224, 324) eingerichtet ist, und
- die Steuereinheit (232, 332) zum Generieren des mindestens einen Steuerdatensatzes (352) abhängig von dem mindestens einen erfassten Lageparameter eingerichtet ist.

6. Mobile Offshore-Vorrichtung (224, 324) nach einem der vorherigen Ansprüche, **dadurch gekennzeichnet, dass**
- die mobile Offshore-Vorrichtung (224, 324) mindestens eine Bewegungserfassungseinheit (234, 334) umfasst, die zum Erfassen mindestens eines Bewegungsparameters der mobilen Offshore-Vorrichtung (224, 324) eingerichtet ist, und
- die Steuereinheit (232, 332) zum Generieren des mindestens einen Steuerdatensatzes (352) abhängig von dem mindestens einen erfassten Bewegungsparameter eingerichtet ist.

7. Mobile Offshore-Vorrichtung (224, 324) nach Anspruch 5, **dadurch gekennzeichnet, dass** der mindestens eine Lageparameter der mobilen Offshore-Vorrichtung (224, 324) ausgewählt ist aus der Gruppe, umfassend:
- einen Krängungswinkel der mobilen Offshore-Vorrichtung (224, 324) in Bezug zu der Längsachse (233) der mobilen Offshore-Vorrichtung (224, 324),
- einen Stampfwinkel der mobilen Offshore-Vorrichtung (224, 324) in Bezug zu der Querachse (235) der mobilen Offshore-Vorrichtung (224, 324),
- Gierwinkel der mobilen Offshore-Vorrichtung (224, 324) in Bezug zu der Hochachse (237) der mobilen Offshore-Vorrichtung (224, 324),
- Geschwindigkeit der mobilen Offshore-Vorrichtung (224, 324),
- einen vertikalen Abstand der mobilen Offshore-Vorrichtung (224, 324) zu der Wasseroberfläche und/oder zu einer Anlandeeinrichtung (349) der weiteren Offshore-Vorrichtung (348),
- einen horizontalen Abstand der mobilen Offshore-Vorrichtung (224, 324), insbesondere der Anlande-Plattform (326) der mobilen Offshore-Vorrichtung (224, 324), in horizontaler Richtung zu einer Anlandeeinrichtung (349) der weiteren Offshore-Vorrichtung (348).

8. Mobile Offshore-Vorrichtung (224, 324) nach einem der vorherigen Ansprüche 5 bis 7, **dadurch gekennzeichnet, dass**
- die Steuereinheit (232, 332) zum Generieren des mindestens einen Steuerdatensatzes (352) abhängig von mindestens einem bereitgestellten Umgebungsparameter der mobilen Offshore-Vorrichtung (224, 324) eingerichtet ist,
- wobei der mindestens eine Umgebungsparameter ausgewählt ist aus der Gruppe, umfassend:
- Wellenhöhe,
- Windgeschwindigkeit,
- Windrichtung,
- Strömungsrichtung,
- Strömungsgeschwindigkeit.

9. Mobile Offshore-Vorrichtung (224, 324) nach einem der vorherigen Ansprüche, **dadurch gekennzeichnet, dass**
- die mobile Offshore-Vorrichtung (224, 324) mindestens eine elektrische Energieversorgungseinheit (230, 330) umfasst, die zum Versorgen mindestens einer Antriebseinheit (114) mindestens einer Tragflügeleinrichtung (100, 200, 300) eingerichtet ist,
- wobei die elektrische Energieversorgungseinheit (230, 330) mindestens ein erstes zu einem zweiten elektrischen Anschlussmodul (350) einer weiteren Offshore-Vorrichtung (348) eines Offshore-Windparks korrespondierendes elektrisches Anschlussmodul (330) umfasst, und/oder
- wobei die elektrische Energieversorgungseinheit (230, 330) mindestens eine wiederaufladbare Batterie umfasst.

10. Mobile Offshore-Vorrichtung (224, 324) nach einem der vorherigen Ansprüche **dadurch gekennzeichnet, dass**
- die mobile Offshore-Vorrichtung (224, 324) mindestens vier mit der Rumpfeinrichtung (228, 328) verbundene Tragflügeleinrichtungen (100, 200, 300) umfasst,
- wobei die Rumpfeinrichtung (228, 328) vier Eckbereiche (238) aufweist, und
- wobei jeweils eine Tragflügeleinrichtung (100, 200, 300) in jeweils einem Eckbereich (238) angeordnet ist.

11. Verfahren zum Betreiben einer mobilen Offshore-Vorrichtung (224, 324) nach einem der vorherigen Ansprüche, insbesondere zum Anlanden an eine weitere Offshore-Vorrichtung (348), umfassend:
- Bereitstellen mindestens eines Lageparameters der mobilen Offshore-Vorrichtung (224, 324),
- Generieren mindestens eines Steuerdatensatzes (352), basierend auf dem mindestens einen bereitgestellten Lageparameter,
- Steuern der mindestens zwei Tragflügeleinrichtungen (100, 200, 300), wobei das Steuern zumindest das Drehen der mindestens einen Tragflügeleinrichtung (100, 200, 300) abhängig von dem mindestens einen generierten Steuerdatensatz zumindest um eine im Wesentlichen vertikale Drehachse (112, 312) der Tragflügeleinrichtung (100, 200, 300) umfasst.

12. Verfahren nach Anspruch 11, **dadurch gekennzeichnet, dass**
- das Steuern ein Ändern des Anstellwinkels (342) des Tragflügels (106, 206, 306) mindestens einer Tragflügeleinrichtung (100, 200, 300) abhängig von mindestens einem generierten Steuerdatensatz (352) umfasst,
und/oder
- das Steuern ein Ändern des Anstellwinkels (342) mindestens einer an der Tragflügeleinrichtung (100, 200, 300) montierten Endleistenklappe des Tragflügels (106, 206, 306) abhängig von mindestens einem bereitstellbaren Steuerdatensatz (352) umfasst,
und/oder
- das Steuern ein Ändern der Antriebsleistung des Strömungserzeugers (108, 208, 308) mindestens einer Tragflügeleinrichtung (100, 200, 300) abhängig von mindestens einem generierten Steuerdatensatz (352) umfasst.

13. Verfahren nach Anspruch 11 oder 12, **dadurch gekennzeichnet, dass**
- das Steuern der mindestens zwei Tragflügeleinrichtungen (100, 200, 300) derart durchgeführt wird, dass die mobile Offshore-Vorrichtung (224, 324) eine vorgebbare Lageposition erreicht,
- wobei die vorgebbare Lageposition durch mindestens ein Kriterium definiert ist, ausgewählt aus der Gruppe, umfassend:
- ein vorgebbares Krängungswinkelkriterium der mobilen Offshore-Vorrichtung (224, 324) in Bezug zu der Längsachse (233) der mobilen Offshore-Vorrichtung (224, 324),
- ein vorgebbares Stampfwinkelkriterium der mobilen Offshore-Vorrichtung (224, 324) in Bezug zu der Querachse (235) der mobilen Offshore-Vorrichtung (224, 324),
- ein vorgebbares Gierwinkelkriterium der mobilen Offshore-Vorrichtung (224, 324) in Bezug zu der Hochachse (237) der mobilen Offshore-Vorrichtung (224, 324),
- ein vorgebbares Geschwindigkeitskriterium der mobilen Offshore-Vorrichtung (224, 324),
- ein vorgebbares vertikales Abstandskriterium der mobilen Offshore-Vorrichtung (224, 324) in Bezug zu der Wasseroberfläche und/oder zu einer Anlandeeinrichtung (349) der weiteren Offshore-Vorrichtung (348), und
- ein vorgebbares horizontales Abstandskriterium der mobilen Offshore-Vorrichtung (224, 324) zu einer Anlandeeinrichtung (349) der weiteren Offshore-Vorrichtung (348).

## Claims

1. Mobile offshore apparatus (224, 324), in particular, a watercraft (224, 324), for landing at a further offshore apparatus (348) comprising:
- at least one hull device (228, 328),
- at least two hydrofoil devices (100, 200, 300) connected to the hull device (228, 328), wherein each hydrofoil device (100, 200, 300) comprises:
- at least one base body (102, 202, 302) with at least one connection unit (104, 304), which is configured to connect the hydrofoil device (100, 200, 300) to the mobile offshore apparatus (224, 324),
- at least one hydrofoil (106, 206, 306) arranged on the base body (102, 202, 302),
- at least one flow generator (108, 208, 308) arranged on the base body (102, 202, 302), which is configured to generate a surround flow (110, 310) of the hydrofoil (106, 206, 306),
- wherein the hydrofoil device (100, 200, 300), in its intended use, is rotatable about at least one substantially vertical axis of rotation (114, 314) as a function of at least one providable control data set (352), and
- at least one control unit (232, 332) which is configured to provide the at least one control data set (352),
**characterized in that**
- at least one guide plate (236) is connected to the hull device (228, 328), such that the guide plate (236) is arranged between the at least two hydrofoil devices (100, 200, 300),
- wherein the guide plate (236) is movable at least in a vertical direction..

2. Mobile offshore apparatus (224, 324) according to claim 1, **characterized in that**
- the base body (102, 202, 302) comprises at least one drive unit (114) which is configured to drive the flow generator (108, 208, 308),
- wherein the drive unit (114) is, in particular, an electric motor (114).

3. Mobile offshore apparatus (224, 324) according to claim 1 or 2, **characterized in that**
- the hydrofoil device (100, 200, 300), in its intended use, is configured to change the angle of attack (342) of the hydrofoil (106, 206, 306) as a function of at least one providable control data set (352),
and/or
- the hydrofoil device (100, 200, 300), in its intended use, is configured to change the angle of attack (342) of at least one end strip flap of the hydrofoil (106, 206, 306) mounted on the hydrofoil unit as a function of at least one providable control data set (352),
and/or
- the hydrofoil device (100, 200, 300) in its intended use is configured to change the drive power of the flow generator (108, 208, 308) as a function of at least one providable control data set (352).

4. Mobile offshore apparatus (224, 324) according to any of the previous claims, **characterized in that**
- the hydrofoil device (100, 200, 300) is movable in a vertical direction (344) and/or in a horizontal direction in its intended use,
and/or
- the hydrofoil device (100, 200, 300) is formed to be foldable.

5. Mobile offshore apparatus (224, 324) according to any of the previous claims, **characterized in that**
- the mobile offshore apparatus (224, 324) comprises at least one position detecting device (234, 334) which is configured to detect at least one position parameter of the mobile offshore apparatus (224, 324), and
- the control unit (232, 332) is configured to generate the at least one control data set (352) as a function of the at least one detected position parameter.

6. Mobile offshore apparatus (224, 324) according to any one of the preceding claims, **characterized in that**
- the mobile offshore apparatus (224, 324) comprises at least one motion detection unit (234, 334) which is configured to detect at least one motion parameter of the mobile offshore apparatus (224, 324), and
- the control unit (232, 332) is configured to generate the at least one control data set (352) as a function of the at least one detected motion parameter.

7. Mobile offshore apparatus (224, 324) according to claim 5, **characterized in that** the at least one position parameter of the mobile offshore apparatus (224, 324) is selected from the group, comprising:
- a heel angle of the mobile offshore apparatus (224, 324) with respect to the longitudinal axis (233) of the mobile offshore apparatus (224, 324),
- a pitch angle of the mobile offshore apparatus (224, 324) with respect to the transverse axis (235) of the mobile offshore apparatus (224, 324),
- a yaw angle of the mobile offshore apparatus (224, 324) with respect to the vertical axis (237) of the mobile offshore apparatus (224, 324),
- speed of the mobile offshore apparatus (224, 324),
- a vertical distance of the mobile offshore apparatus (224, 324) to the water surface and/or to a landing device (349) of the further offshore apparatus (348),
- a horizontal distance of the mobile offshore apparatus (224, 324), in particular, of the landing platform (326) of the mobile offshore apparatus (224, 324), in a horizontal direction to a landing device (349) of the further offshore apparatus (348).

8. Mobile offshore apparatus (224, 324) according to any of the previous claims 5 to 7, **characterized in that**
- the control unit (232, 332) is configured to generate the at least one control data set (352) as a function of at least one provided environmental parameter of the mobile offshore apparatus (224, 324),
- wherein the at least one environmental parameter is selected from the group, comprising:
- wave height,
- wind speed,
- wind direction,
- flow direction,
- flow velocity.

9. Mobile offshore apparatus (224, 324) according to any of the previous claims, **characterized in that**
- the mobile offshore apparatus (224, 324) comprises at least one electric power supply unit (230, 330) which is configured to supply power to at least one drive unit (114) of at least one hydrofoil device (100, 200, 300),
- wherein the electrical power supply unit (230, 330) comprises at least one first electrical connection module (330) corresponding to a second electrical connection module (350) of a further offshore apparatus (348) of an offshore wind farm, and/or
- wherein the electrical power supply unit (230, 330) comprises at least one rechargeable battery.

10. Mobile offshore apparatus (224, 324) according to any one of the preceding claims **characterized in that**
- the mobile offshore apparatus (224, 324) comprises at least four hydrofoil devices (100, 200, 300) connected to the hull device (228, 328),
- wherein the hull device (228, 328) comprises four corner regions (238), and
- wherein a respective hydrofoil device (100, 200, 300) is arranged in a respective corner region (238).

11. Method of operating a mobile offshore apparatus (224, 324) according to any one of the preceding claims, in particular, for landing at a further offshore apparatus (348), comprising:
- providing at least one position parameter of the mobile offshore apparatus (224, 324),
- generating at least one control data set (352) based on the at least one provided position parameter,
- controlling the at least two hydrofoil devices (100, 200, 300), wherein the controlling comprises at least rotating the at least one hydrofoil device (100, 200, 300) as a function of the at least one generated control data set about at least one substantially vertical axis of rotation (112, 312) of the hydrofoil device (100, 200, 300).

12. Method according to claim 11, **characterized in that**
- the controlling comprises changing the angle of attack (342) of the hydrofoil (106, 206, 306) of at least one hydrofoil device (100, 200, 300) as a function of at least one generated control data set (352),
and/or
- the controlling comprises changing the angle of attack (342) of at least one end strip flap of the hydrofoil (106, 206, 306) mounted to the hydrofoil device (100, 200, 300) as a function of at least one providable control data set (352),
and/or
- the controlling comprises changing the drive power of the flow generator (108, 208, 308) of at least one hydrofoil device (100, 200, 300) as a function of at least one generated control data set (352).

13. Method according to claim 11 or 12, **characterized in that**
- the controlling of the at least two hydrofoil devices (100, 200, 300) is performed such that the mobile offshore apparatus (224, 324) reaches a predeterminable position location,
- wherein the predeterminable position location is defined by at least one criterion selected from the group, comprising:
- a predeterminable heel angle criterion of the mobile offshore apparatus (224, 324) with respect to the longitudinal axis (233) of the mobile offshore apparatus (224, 324),
- a predeterminable pitch angle criterion of the mobile offshore apparatus (224, 324) with respect to the transverse axis (235) of the mobile offshore apparatus (224, 324),
- a predeterminable yaw angle criterion of the mobile offshore apparatus (224, 324) with respect to the vertical axis (237) of the mobile offshore apparatus (224, 324),
- a predeterminable speed criterion of the mobile offshore apparatus (224, 324),
- a predeterminable vertical distance criterion of the mobile offshore apparatus (224, 324) with respect to the water surface and/or to a landing device (349) of the further offshore apparatus (348), and
- a predeterminable horizontal distance criterion of the mobile offshore apparatus (224, 324) with respect to a landing device (349) of the further offshore apparatus (348).

## Revendications

1. Dispositif offshore mobile (224, 324), en particulier embarcation (224, 324), pour l'amarrage à un autre dispositif offshore (348) comprenant :
- au moins un dispositif de coque (228, 328),
- au moins deux dispositifs à aile portante (100, 200, 300) reliés au dispositif de coque (228, 328), comprenant :
- au moins un corps de base (102, 202, 302) avec au moins une entité de liaison (104, 304) qui est configuré pour relier le dispositif à aile portante (100, 200, 300) au dispositif offshore mobile (224, 324),
- au moins une aile portante (106, 206, 306) disposée sur le corps de base (102, 202, 302),
- au moins un générateur d'écoulement(108, 208, 308) disposé sur le corps de base (102, 202, 302), qui est configuré pour générer un écoulement autour (110, 310) l'aile portante (106, 206, 306),
- où le dispositif d'aile (100, 200, 300) est tournable, dans le cadre de son utilisation prévue, en fonction d'au moins un ensemble de données de commande (352) fournissable, au moins autour d'un axe de rotation (114, 314) essentiellement vertical, et
- au moins une entité de commande (232, 332), qui est configurée pour mettre à disposition le au moins un ensemble de données de commande (352),
- au moins un plaque de guidage (236) est relié au dispositif de coque (228, 328), de telle sorte que le plaque de guidage (236) est disposé entre les au moins deux dispositifs d'aile portante (100, 200, 300),
- où le plaque de guidage (236) est déplaceable au moins dans une direction verticale.

2. Dispositif offshore mobile (224, 324) selon la revendication 1, **caractérisé en ce que**
- le corps de base (102, 202, 302) comprend au moins une entité d'entraînement (114) qui est configuré pour entraîner le générateur d'écoulement (108, 208, 308),
- où l'entité d'entraînement (114) est en particulier un moteur électrique (114).

3. Dispositif mobile offshore (224, 324) selon la revendication 1 ou 2, **caractérisé en ce que**
- le dispositif à aile portante (100, 200, 300) est configuré, dans le cadre de son utilisation prévue, pour modifier l'angle d'incidence (342) de l'aile portante (106, 206, 306) en fonction d'au moins un ensemble de données de commande (352) fournissable,
et/ou
- le dispositif à aile portante (100, 200, 300) est configuré, dans le cadre de son utilisation prévue, pour modifier l'angle d'incidence (342) d'au moins un volet de barre d'extrémité de l'aile portante (106, 206, 306) monté sur le dispositif à aile portante, en fonction d'au moins un ensemble de données de commande (352) fournissable,
et/ou
- le dispositif à aile portante (100, 200, 300) est configuré, dans le cadre de son utilisation prévue, pour modifier la puissance d'entraînement du générateur d'écoulement (108, 208, 308) en fonction d'au moins un ensemble de données de commande (352) fournissable.

4. Dispositif mobile offshore (224, 324) selon l'une des revendications précédentes, **caractérisé en ce que**
- le dispositif à aile portante (100, 200, 300) est déplaceable dans une direction verticale (344) et/ou dans une direction horizontale dans le cadre de son utilisation prévue,
et/ou
- le dispositif à aile portante (100, 200, 300) est configuré de manière repliable.

5. Dispositif mobile offshore (224, 324) selon l'une des revendications précédentes, **caractérisé en ce que**
- le dispositif mobile offshore (224, 324) comprend au moins une entité de détection de position (234, 334) qui est configurée pour détecter au moins un paramètre de position du dispositif mobile offshore (224, 324), et
- l'entité de commande (232, 332) est configuré pour générer l'au moins un ensemble de données de commande (352) en fonction de l'au moins un paramètre de position détecté.

6. Dispositif mobile offshore (224, 324) selon l'une des revendications précédentes, **caractérisé en ce que**
- le dispositif mobile offshore (224, 324) comprend au moins une entité de détection de mouvement (234, 334) configuré pour détecter au moins un paramètre de mouvement du dispositif mobile offshore (224, 324), et
- l'unité de commande (232, 332) est configuré pour générer l'au moins un ensemble de données de commande (352) en fonction de l'au moins un paramètre de mouvement détecté.

7. Dispositif mobile offshore (224, 324) selon la revendication 5, **caractérisé en ce que** le au moins un paramètre de position du dispositif mobile offshore (224, 324) est choisi dans le groupe comprenant :
- un angle de gîte du dispositif mobile offshore (224, 324) par rapport à l'axe longitudinal (233) du dispositif mobile offshore (224, 324),
- un angle de tangage du dispositif mobile offshore (224, 324) par rapport à l'axe transversal (235) du dispositif mobile offshore (224, 324),
- angle de lacet du dispositif mobile offshore (224, 324) par rapport à l'axe vertical (237) du dispositif mobile offshore (224, 324),
- la vitesse du dispositif mobile offshore (224, 324),
- une distance verticale du dispositif offshore mobile (224, 324) par rapport à la surface de l'eau et/ou à une installation d'amarrage (349) de l'autre dispositif offshore (348),
- une distance horizontale du dispositif offshore mobile (224, 324), en particulier de la plate-forme d'amarrage (326) du dispositif offshore mobile (224, 324), dans la direction horizontale par rapport à une installation d'amarrage (349) de l'autre dispositif offshore (348).

8. Dispositif mobile offshore (224, 324) selon l'une des revendications précédentes 5 à 7, **caractérisé en ce que**
- l'entité de commande (232, 332) est configuré pour générer l'au moins un ensemble de données de commande (352) en fonction d'au moins un paramètre environnemental fourni du dispositif mobile offshore (224, 324),
- où le au moins un paramètre environnemental est choisi dans le groupe comprenant :
- hauteur de vagues,
- vitesse de vent,
- direction de vent,
- direction d'écoulement,
- vitesse d'écoulement.

9. Dispositif mobile offshore (224, 324) selon l'une des revendications précédentes, **caractérisé en ce que**
- le dispositif mobile offshore (224, 324) comprend au moins une entité d'alimentation en énergie électrique (230, 330) configuré pour alimenter au moins une entité d'entraînement (114) d'au moins un dispositif à aile portante (100, 200, 300),
- où l'entité d'alimentation en énergie électrique (230, 330) comprend au moins un premier module de raccordement électrique (330) correspondant à un deuxième module de raccordement électrique (350) d'un autre dispositif offshore (348) d'un parc éolien offshore, et/ou
- où le module d'alimentation en énergie électrique (230, 330) comprend au moins une batterie rechargeable.

10. Dispositif mobile offshore (224, 324) selon l'une des revendications précédentes, **caractérisé en ce que**
- le dispositif mobile offshore (224, 324) comprend au moins quatre dispositifs à aile portante (100, 200, 300) reliés au dispositif de coque (228, 328),
- où le dispositif de coque (228, 328) a quatre zones de coin (238), et
- où un dispositif à aile portante (100, 200, 300) est respectivement disposé dans une zone de coin (238).

11. Procédé d'exploitation d'un dispositif offshore mobile (224, 324) selon l'une des revendications précédentes, en particulier pour l'amarrage à un autre dispositif offshore (348), comprenant :
- fournir au moins un paramètre de position du dispositif mobile offshore (224, 324),
- générer au moins un ensemble de données de commande (352), sur la base du au moins un paramètre de position fourni,
- commander les au moins deux dispositifs à aile portante (100, 200, 300), la commande comprenant au moins la rotation du au moins un dispositif à aile portante (100, 200, 300) en fonction du au moins un ensemble de données de commande généré au moins autour d'un axe de rotation essentiellement vertical (112, 312) du dispositif à aile portante (100, 200, 300).

12. Procédé selon la revendication 11, **caractérisé en ce que**
- le commande comprend une modification de l'angle d'incidence (342) de l'aile (106, 206, 306) d'au moins un dispositif à aile portante (100, 200, 300) en fonction d'au moins un ensemble de données de commande généré (352),
et/ou
- la commande comprend une modification de l'angle d'incidence (342) d'au moins un volet de barre d'extrémité de l'aile (106, 206, 306) monté sur le dispositif d'aile portante (100, 200, 300) en fonction d'au moins un ensemble de données de commande (352) fournissable,
et/ou
- la commande comprend une modification de la puissance d'entraînement du générateur d'écoulement (108, 208, 308) d'au moins un dispositif d'aile (100, 200, 300) en fonction d'au moins un ensemble de données de commande (352) généré.

13. Procédé selon la revendication 11 ou 12, **caractérisé en ce que**
- la commande des au moins deux dispositifs à aile portante (100, 200, 300) est effectuée de manière à ce que le dispositif mobile offshore (224, 324) atteigne une position d'attitude prédéfinissable,
- où la position d'orientation prédéfinissable est définie par au moins un critère choisi dans le groupe comprenant :
- un critère prédéfinissable d'angle de gîte du dispositif mobile offshore (224, 324) par rapport à l'axe longitudinal (233) du dispositif mobile offshore (224, 324),
- un critère prédéfinissable d'angle de tangage du dispositif mobile offshore (224, 324) par rapport à l'axe transversal (235) du dispositif mobile offshore (224, 324),
- un critère prédéfinissable d'angle de lacet du dispositif mobile offshore (224, 324) par rapport à l'axe vertical (237) du dispositif mobile offshore (224, 324),
- un critère prédéfinissable de vitesse du dispositif mobile offshore (224, 324),
- un critère prédéfinissable de distance verticale du dispositif offshore mobile (224, 324) par rapport à la surface de l'eau et/ou à un dispositif d'amarrage (349) de l'autre dispositif offshore (348), et
- un critère prédéfinissable de distance horizontale du dispositif offshore mobile (224, 324) par rapport à une installation d'amarrage (349) de l'autre dispositif offshore (348).
